# EUROPEAN PATENT SPECIFICATION

(11) **EP 2 316 277 B1**
(45) Date of publication and mention of the grant of the patent: **18.05.2016**
(21) Application number: 10189547.2
(22) Date of filing: 01.11.2010
(51) Int. Cl.: A23L 7/117, A23L 25/00, A23P 30/10, A23G 3/54, A23G 3/48

(54) **NUT CLUSTER BINDER AND METHOD OF MANUFACTURE**
NUSSHÄUFCHENBINDEMITTEL UND HERSTELLUNGSVERFAHREN DAFÜR
LIANT DE GROUPE DE NOIX ET PROCÉDÉ DE FABRICATION

(30) Priority: 30.10.2009 US 609693
(43) Date of publication of application: 04.05.2011
(73) Proprietor: Intercontinental Great Brands LLC, East Hanover, NJ 07936 (US)
(72) Inventor: Locke, John, Hillsdale, NJ 07642 (US); Coleman, Edward, Connecticut, NY 06812 (US); Sornoza, Froilan, Little Falls, NJ 07424 (US)
(74) Representative: Boult Wade Tennant

(56) References cited:
- EP-A2- 0 138 582
- US-A- 4 784 867
- US-A- 4 871 557
- US-A1- 2002 168 448
- US-A1- 2006 045 938
- US-A1- 2006 286 212

## Description

### FIELD

The present products and methods generally relate to food binder compositions, and more particularly, to food binder compositions that, when coated to a solid nut blend, provide a cohesive shelf-stable low water activity product that is chewy and has high lubricity.

### BACKGROUND

Food binding agents are known in the art to add cohesiveness to various types of food product blends. Food product blends can typically include an almost infinite combination of grains, nuts, cereals, granola, dried fruits, seeds, cookie crumbs, pretzels, and the like. Such products can be formed into granola bars, nut clusters, or other types of food bars or snack bars ('food bars'). Other ingredients can include preservatives, sweeteners, flavorings (including salt and extracts), and the like.

In the past, binding agents for food bars have included various shortening and syrup combinations, such as corn syrup or maple syrup. Product ingredients can be mixed with the binder, then formed into bars or slabs. The final product is typically mixed, formed and/or baked prior to packaging and sale.

Other ingredients and methods are also known for food bars. For example, polyhydric alcohols (a polyol), such as glycerine or sorbitol, can be added to improve cohesiveness, texture, release of product from a mold, as well as provide for a sugar substitute. Polyhydric alcohols can also act as a humectant to lower product moisture. Despite these potential advantages, addition of a polyhydric alcohol can negatively affect product taste.

Improving shelf life of a food bar is also of interest in the art by reducing or eliminating growth of molds, yeasts and bacteria. The reduction or elimination of such microbial growth of a final product can be attempted in many ways. The product can be sterilized, then hermetically sealed or frozen. Product pH can be reduced. Water content can also be lowered. However, these attempts can have disadvantages. Freezing and sterilizing can add significant production costs and alter product taste. Many foods do not tolerate or taste good in a low pH.

Water content of a product, as measured by its water activity (A_{w}), has a significant affect on product shelf life. A_{w} is the partial vapor pressure of water in a product at room temperature. In general, a low A_{w} of about 0.9 percent generally creates an environment in which most bacteria will not grow. Cook et al. (U.S. Pat. 4,451,488) discloses a product with reduced sugar and increased polyhydric alcohols, while keeping the A_{w} below 0.55.

Unfortunately, lowering water content can make the product extremely hard and tooth compacting (i.e., a low lubricity, which can cause product to stick in consumer's teeth during consumption). This can be especially true for products containing nut blends.

Also, Linscott (U.S. Pat. 4,871,557) discloses a syrup based binder for a food bar (granola) that can include from about 1 to about 10 percent of an edible oil, such as a hydrogenated soybean/cottonseed oil. Preferably, the oil is about 5 percent of the syrup pre-blend and about 2 percent of the final product. Lecithin can be added as an oil emulsifier in an amount of about 0.25 percent of the syrup pre-blend and about 0.1 weight percent of the final product.

Further, Becker, et al. (U.S. Pats. 4,568,557 and 4,673,578) discloses snack food products including nut blends where a fat portion of about 25 to 55 percent by weight can include coconut oil, palm oil, palm kernel oil, cottonseed oil, safflower oil, sunflower oil, soy oil, corn oil and mixtures thereof. In one embodiment, the fat portion is a combination of about 28 percent fractionated palm kernel oil and about 2 percent hydrogenated palm oil. This product has high fiber and high water activity for extrusion and immediate consumption without baking.

While there have been significant advances in the art, further advances are possible. For example, there is a desire and need in the art to provide a binder composition that provides the viscosity, cohesion, and functional properties of traditional binders for food bars, but with a softer texture that has high lubricity, especially in low A_{w} environments and suitable for use with food products containing nut blends.

US 4,784,867 discloses an edible composition which is useful in binding solid food ingredients such as nuts, fruit, cereals and the like into flexible, moist bars.

US 2006/0286212 A1 discloses caramel compositions suitable for use with crisp bases such as cookies and crackers.

US 2002/0168448 A1 discloses a nutritional food bar providing sustained energy to the consumer, the bar comprises a core, a coating and a mixture of vitamins, minerals, proteins, carbohydrates and fats.

EP 0138582 A2 discloses an edible composition which is useful for binding solid food ingredients such as nuts, fruit, cereals and the like into flexible, moist bars.

### SUMMARY

Accordingly, there is provided herein embodiments and methods of producing compositions generally relating to food binder compositions, and more particularly, to food binder compositions that, when blended with a solid nut blend, provide a cohesive shelf-stable low water activity product that is chewy and has high lubricity (i.e., not tooth-compacting).

The present disclosure provides a food comprising a binder in the range of 25 to 35 percent weight, and further comprising:
(i) a nut blend; or
(ii) components selected from the list of grains, nuts, cereals, granola, dried fruits, seeds, cookie crumbs, pretzels and combinations thereof,
wherein the binder comprises:
a non-sucrose aqueous based syrup in a range from 42 to 62 percent;
sucrose in an amount of about 22 percent weight fine grind sucrose;
polyhydric alcohol in an amount of about 6 percent weight;
fat in a range from 2 to 20 percent weight; and
an emulsifier in an amount of about 1 percent weight.

In a preferred embodiment, the binder can have 42 to 62 percent weight corn syrup or brown rice syrup or a blend, about 22 percent weight fine grind sucrose, about 6 percent weight glycerin or other polyol, about 2 to 20 percent weight fractionated palm kernel oil, about 1 percent weight lecithin, and less than about 3 percent weight flavors. Flavors can include salt, natural extracts, fruit flavors, chocolate flavors, artificial flavors, caramel flavoring, peanut butter, and the like.

In a preferred embodiment, the syrup/sucrose:fat:polyhydric alcohol ratio is about 9:3:1 respectively, by weight. Also, in a product using the binder, the binder is in the range of about 25 to 35 percent weight of the total product and can have an A_{w} less than about 0.35.

An embodiment of a food product using the described binder can preferably contain a nut blend, but optionally can contain other dry goods such as grains, nuts, cereals, granola, dried fruits, seeds, cookie crumbs, pretzels and combinations thereof.

Methods of making a nut blend product using the binder can include the steps of preblending, storing and cooking the binder in a jacketed continuous cooker at about 75 to 140 degrees Celsius (and preferably at about 132 degrees Celsius); heating a nut blend to a range of about 80 to 110 degrees Celsius; and blending the binder and nut blend in a jacketed continuous mixer until the nut blend is thoroughly coated. Optionally, other minor ingredients can be included such as flavors, grains, nuts, cereals, granola, dried fruits, seeds, cookie crumbs, pretzels and the like.

Additional steps can include tamping the product into a slab after blending the binder and nut blend; cutting the slab to a final product dimension; nitrogen flushing a package; inserting the product; and sealing the product.

Other features will become more apparent to persons having ordinary skill in the art to which pertains from the following description and claims.

### DETAILED DESCRIPTION

The present products and methods generally relate to food binder compositions, and more particularly, to food binder compositions that, when coated to a solid nut blend, provide a cohesive shelf-stable low water activity product that is chewy and has a high lubricity (i.e., not tooth-compacting).

In general, the present products utilize a sugar/fat/polyhydric alcohol blend that can deliver a cluster that retains moistness, stability, cohesiveness and free-flow characteristics at moderate sweetness levels. The present binder can thus provide, for example, a nut cluster product with superior organoleptic and stability characteristics.

As described herein, the binder comprises:
a non-sucrose aqueous based syrup in a range from 42 to 62 percent;
sucrose in an amount of about 22 percent weight fine grind sucrose;
polyhydric alcohol in an amount of about 6 percent weight;
fat in a range from 2 to 20 percent weight; and
an emulsifier in an amount of about 1 percent weight.
One preferred embodiment can have 42 to 62 percent weight syrup, about 22 percent weight fine grind sucrose, about 6 percent weight glycerin or other polyol, about 2 to 20 percent weight fractionated palm kernel oil, about 1 percent weight emulsifier, and less than about 3 percent weight flavors.

Any fat exhibiting a melting point similar to palm kernel oil, such as cocoa butter, can also be used. The fat in the binder, provides lubricity and improves moistness throughout the product shelf life. The emulsifier can be a food grade emulsifier such as lecithin, and the like. Flavors can include salt, natural extracts, chocolate, fruit, caramel, and the like. It is noted that an unexpected benefit of the binder composition described herein is the high degree of flavor delivery than would be expected for a product using this binder. The fat/glycerine combination can act to form a barrier or a complex to protect the flavor.

The syrup can be an aqueous based syrup of corn syrup, brown rice syrup, a blend of corn and brown rice syrup, or other blends that can result in a dextrose equivalent (DE) of approximately 42 or 43DE, or even higher. Additionally, a soluble fiber can be added to improve product nutrition, such as inulins, fructooligosaccharides, soluble corn fiber and polydextrose. Fine-grind sucrose can be added to increase solids.

Polyhydric alcohol is a polyol and includes any organic compound having three or more hydroxyl functional groups. The present polyhydric alcohols, such as glycerin, sorbitol, maltitol, mannitol, xylitol or other food grade polyhydric alcohol can serve as a humectant to lower the water activity of the final product. The humectant is introduced in proportion so that when added to the binder and other dry products, such as nut blends, grains, nuts, cereals, granola, dried fruits, seeds, cookie crumbs, pretzels and combinations thereof, the final product water activity ('A_{w} ) is less than about 0.4 (and preferably less than 0.35) to improve shelf life. It is noted though that some dry ingredients, like some fruits, have higher water content than may be suitable for some types of compositions to maintain the preferred A_{w}.

The binder is in the range of about 25 to 35 percent of the total product by weight, and preferably around 30 percent by weight. It is also noted that a syrup/sucrose: fat: polyhydric alcohol ratio of 9:3:1 within the binder provides preferred results and "free-flow" characteristics. Nuts coated with this syrup/sucrose:fat:polyhydric alcohol layer have excellent shelf life via oxidative rancidity control of at least nine months at ambient temperatures.

Prior attempts to develop nut cluster products having greater than about 30 percent weight nut blend have resulted in a hard texture and exhibit poor cohesion. In contrast, using the binder described herein, the final product exhibits excellent cohesive properties and texture that is not hard and tooth-compacting. Also, the binder provides an excellent medium for the addition of flavors. Thus, products using the present binder deliver excellent flavor, texture and are free-flowing (no surface stickiness).

Exemplary embodiments of binder formulations can be found in Table I that could ultimately compose about 25 to 35 percent weight of the total product. Exemplary embodiments of dry components that could be about 75 to 65 percent weight of the total product to blend with the binder to make a food product can be found in Table 2. In addition to salt, other flavors are possible such as fruit, natural extracts, artificial flavors, Chocolate, caramel, peanut butter, and the like.

**Table 1: Exemplary formulations of the binder**

| **Ingredients** | **Binder A** | **Binders B** | **Binder C** |
|---|---|---|---|
| Corn Syrup 42DE | 42% | 56% | 50% |
| Sugar FG | 42% | 22% | 22% |
| Glycerin | 6% | 6% | 6% |
| FPKO | 6% | 12% | 18% |
| Salt | 3% | 3% | 3% |
| Lecithin | 1% | 1% | 1% |

**Table 2: Exemplary formulations of the dry components**

| **Ingredients** | **Blend A** | **Blend B** | **Blend C** |
|---|---|---|---|
| Peanuts | 35% | 35% | 35% |
| Almonds | 36% | 36% | 36% |
| Dried Cranberries | 7% | | |
| Dried Raisins | 5% | | |
| Crisp Rice | 6% | | 9% |
| Granola | 10% | | 20% |
| Chocolate Granola | | 20% | |
| Cocoa Crisp | | 9% | |

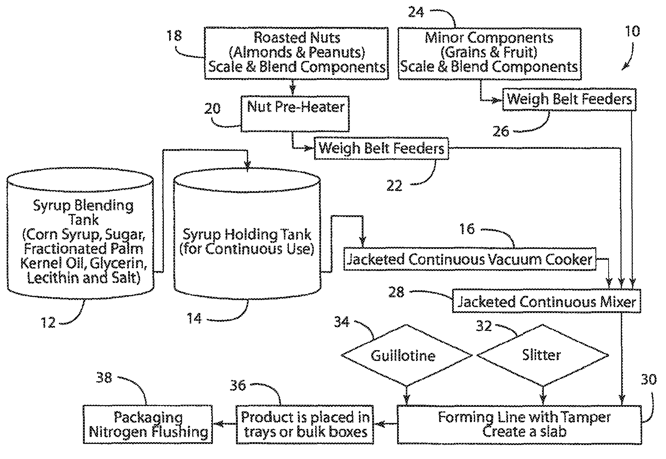

Turning now to the Figure, there is shown a method of manufacturing a food product using the binder described herein and is generally indicated at 10. The binder preparation can include heating the syrup to approximately 80 degrees Celsius then adding in the other binder ingredients, such as additional sugars, fat, flavors, emulsifiers in a pre-cooker mixing tank 12. Next, the binder blend can be sent to a holding tank 14 for continuous use. The binder can then be pumped to a heat exchanger/evaporator 16, such as a jacketed continuous vacuum cooker, and heated to a range of about 75 to 140 degrees Celsius. Preferably, at this step the binder is heated to about 132 degrees Celsius.

The high heating of the binder is possible since dry goods such as nuts tolerate higher temperatures than typical food bars composed of mostly grain or fruit pieces. This adds several product advantages. A higher binder temperature allows improved flow. The high temperature also flashes out some of the moisture in the dry products to achieve the low A_{w}. Nevertheless, given a specified amount of fat, the product retains a softer character than would be expected with high heat binders mixed with grains where the sugar can crystallize and become very hard. The high temperature may also caramelize some of the sugar component providing an added flavor benefit. Temperature range can be adjusted and water can be added at this step as needed to maintain a final product A_{w} of less than 0.4 and preferably less than 0.35.

The nut blend can be scaled and blended at component 18. The resulting nut blend can be heated to about 80 to 110 degrees Celsius in a nut pre-heater 20. Other dry goods can be scaled and blended at component 24. The nut blend can be delivered to a product mixer 28 via a nut blend weigh belt feeder 22. The remaining dry goods can be delivered to product mixer 28 via a second weigh belt feeder 26. The binder is also pumped into product mixer 28. Product mixer 28 can be a jacketed continuous mixer and mix the binder and dry goods until the dry goods are thoroughly blended. Usually this would take approximately 10 to 60 seconds to complete. At this step, water can be added to adjust to final desired water activity.

From product mixer 28, the product can be delivered to a forming line 30, where the product blend can be formed into a product slab using, for example, a tamper. As the product blend cools to about 50 to 60 degrees Celsius, the product slab can be cut into final desire product dimensions, such as 2.5 by 2.5 cms, using a slitter 32 and a guillotine 34.

At step 36, the final product can be placed into trays or other containers to allow further cooling. And, at step 38, the final product can be placed and sealed into a nitrogen flushed package. The packaging can be, but is not required to be, impervious to water.

## Claims

1. A food product comprising a binder in the range of 25 to 35 percent weight, and further comprising:
(i) a nut blend; or
(ii) components selected from the list of grains, nuts, cereals, granola, dried fruits, seeds, cookie crumbs, pretzels and combinations thereof,
wherein the binder comprises:
a non-sucrose aqueous based syrup in a range from 42 to 62 percent weight;
sucrose in an amount of about 22 percent weight fine grind sucrose;
polyhydric alcohol in an amount of about 6 percent weight;
fat in a range from 2 to 20 percent weight; and
an emulsifier in an amount of about 1 percent weight.

2. The food product of claim 1, wherein the syrup is selected from the list consisting of corn syrup, brown rice syrup, and a blend thereof.

3. The food product of any of claim 1 or claim 2, wherein the emulsifier is lecithin.

4. The food product of any of the preceding claims, wherein the polyhydric alcohol is glycerin.

5. The food product of any of the preceding claims, wherein the fat is approximately 12 percent weight fractionated palm kernel oil.

6. The food product of any of the preceding claims, further comprising about less than 3 percent weight flavouring, and/or wherein preferably the flavouring is selected from the list consisting of fruit, natural extracts, artificial flavors, chocolate, caramel and peanut butter.

7. The food product of any of the preceding claims, wherein the syrup/sucrose:fat:polyhydric alcohol ratio is about 9:3:1 respectively by weight.

8. A food product of any of the preceding claims comprising about 30 percent weight of the binder.

9. The food product of any preceding claim, wherein the A_{w} is less than about 0.35.

10. A method of making the food product of any preceding claim, including the steps of:
preblending, storing and cooking the binder in a jacketed continuous cooker at about 75 to 140 degrees Celsius, preferably about 132 degrees Celsius;
heating a nut blend to a range of about 80 to 110 degrees Celsius; and
blending the binder and nut blend in a jacketed continuous mixer until the nut blend is thoroughly coated.

11. The method of claim 10, wherein the blending of the binder and nut blend is in the range of about 10 to 60 seconds.

12. The method of claim 10 or claim 11, further comprising the step of adding minor ingredients selected from the list consisting of flavors, grains, nuts, cereals, granola, dried fruits, seeds, cookie crumbs and pretzels to the jacketed continuous mixer.

13. The method of any of claims 10 to 12, further comprising the steps of:
tamping the product into a slab after blending the binder and nut blend and cutting the slab to a final product dimension,
the method optionally further comprising the steps of:
nitrogen flushing a package;
inserting the product; and
sealing the product.

## Patentansprüche

1. Lebensmittelprodukt, das ein Bindemittel im Bereich von 25 bis 35 Gewichtsprozent umfasst und ferner Folgendes umfasst:
(i) eine Nussmischung; oder
(ii) Bestandteile, die ausgewählt sind aus der Liste von Körnern, Nüssen, Zerealien, Müsli, Trockenfrüchten, Samen, Kekskrümeln, Brezeln und Kombinationen davon,
wobei das Bindemittel Folgendes umfasst:
einen Nichtsaccharose-Sirup auf wässriger Basis in einem Bereich von 42 bis 62 Gewichtsprozent;
Saccharose in einer Menge von etwa 22 Gewichtsprozent fein gemahlener Saccharose;
Polyol in einer Menge von etwa 6 Gewichtsprozent;
Fett in einem Bereich von 2 bis 20 Gewichtsprozent; und
einen Emulgator in einer Menge von etwa 1 Gewichtsprozent.

2. Lebensmittelprodukt nach Anspruch 1, wobei der Sirup ausgewählt ist aus der Liste bestehend aus Maisstärkesirup, braunem Reissirup und einer Mischung davon.

3. Lebensmittelprodukt nach einem von Anspruch 1 oder Anspruch 2, wobei der Emulgator Lecithin ist.

4. Lebensmittelprodukt nach einem der vorstehenden Ansprüche, wobei das Polyol Glycerin ist.

5. Lebensmittelprodukt nach einem der vorstehenden Ansprüche, wobei das Fett ungefähr 12 Gewichtsprozent fraktioniertes Palmkernöl ist.

6. Lebensmittelprodukt nach einem der vorstehenden Ansprüche, das ferner etwa weniger als 3 Gewichtsprozent Aromastoff umfasst und/oder wobei der Aromastoff vorzugsweise ausgewählt ist aus der Liste bestehend aus Früchten, natürlichen Extrakten, künstlichen Aromen, Schokolade, Karamell und Erdnussbutter.

7. Lebensmittelprodukt nach einem der vorstehenden Ansprüche, wobei das Gewichtsverhältnis Sirup/Saccharose:Fett:Polyol etwa 9:3:1 beträgt.

8. Lebensmittelprodukt nach einem der vorstehenden Ansprüche, das zu etwa 30 Gewichtsprozent das Bindemittel umfasst.

9. Lebensmittelprodukt nach einem der vorstehenden Ansprüche, wobei der A_{w}-Wert weniger als etwa 0,35 beträgt.

10. Verfahren zur Herstellung des Lebensmittelprodukts nach einem der vorstehenden Ansprüche, das folgende Schritte umfasst:
das Vormischen, Aufbewahren und Kochen des Bindemittels in einem ummantelten, kontinuierlich arbeitenden Kocher bei etwa 75 bis 140 Grad Celsius, vorzugsweise etwa 132 Grad Celsius;
das Erhitzen einer Nussmischung auf einen Bereich von etwa 80 bis 110 Grad Celsius; und
das Mischen des Bindemittels und der Nussmischung in einem ummantelten, kontinuierlich arbeitenden Mischer, bis die Nussmischung gründlich beschichtet ist.

11. Verfahren nach Anspruch 10, wobei das Mischen des Bindemittels und der Nussmischung im Bereich von etwa 10 bis 60 Sekunden liegt.

12. Verfahren nach Anspruch 10 oder Anspruch 11, das ferner den Schritt des Hinzugebens von geringfügigen Zutaten, ausgewählt aus der Liste bestehend aus Aromen, Körnern, Nüssen, Zerealien, Müsli, Trockenfrüchten, Samen, Kekskrümeln und Brezeln, in den ummantelten, kontinuierlich arbeitenden Mischer umfasst.

13. Verfahren nach einem der Ansprüche 10 bis 12, das ferner folgende Schritte umfasst:
das Stampfen des Produkts zu einer Platte nach dem Mischen des Bindemittels und der Nussmischung, und das Schneiden der Platte in eine endgültige Produktabmessung,
wobei das Verfahren wahlweise ferner die folgenden Schritte umfasst:
das Spülen einer Verpackung mit Stickstoff;
das Einführen des Produkts; und
das Versiegeln des Produkts.

## Revendications

1. Produit alimentaire comprenant un liant dans la plage de 25 à 35 pour cent en poids, et comprenant en outre :
(I) un mélange de fruits à coque ; ou
(ii) des composants choisis parmi la liste de grains, fruits à coques, céréales, muesli, fruits secs, graines, miettes de biscuit sucré, bretzels et leurs combinaisons,
dans lequel le liant comprend :
un sirop à base aqueuse autre que du saccharose dans une plage allant de 42 à 62 pour cent en poids ;
du saccharose en une quantité d'environ 22 pour cent en poids de saccharose à broyage fin ;
de l'alcool polyhydrique en une quantité d'environ 6 pour cent en poids ;
de la matière grasse dans une plage allant de 2 à 20 pour cent en poids ; et
un émulsifiant en une quantité d'environ 1 pour cent en poids.

2. Produit alimentaire selon la revendication 1, dans lequel le sirop est choisi dans la liste constituée de sirop de maïs, sirop de riz brun, et un mélange de ceux-ci.

3. Produit alimentaire selon l'une quelconque parmi la revendication 1 ou la revendication 2, dans lequel l'émulsifiant est la lécithine.

4. Produit alimentaire selon l'une quelconque des revendications précédentes, dans lequel l'alcool polyhydrique est la glycérine.

5. Produit alimentaire selon l'une quelconque des revendications précédentes, dans lequel la matière grasse est approximativement 12 pour cent en poids d'huile de palmiste fractionnée.

6. Produit alimentaire selon l'une quelconque des revendications précédentes, comprenant en outre environ moins de 3 pour cent en poids d'aromatisant, et/ou dans lequel, de préférence, l'aromatisant est choisi dans la liste constituée de fruit, extraits naturels, arômes artificiels, chocolat, caramel et beurre de cacahuète.

7. Produit alimentaire selon l'une quelconque des revendications précédentes, dans lequel le rapport sirop/saccharose:matière grasse:alcool polyhydrique est d'environ 9:3:1 respectivement, en poids.

8. Produit alimentaire selon l'une quelconque des revendications précédentes, comprenant environ 30 pour cent en poids du liant.

9. Produit alimentaire selon l'une quelconque des revendications précédentes, dans lequel le A_{w} est inférieur à environ 0,35.

10. Procédé de fabrication du produit alimentaire selon l'une quelconque des revendications précédentes, incluant les étapes consistant à :
prémélanger, stocker et cuire le liant dans un cuiseur continu gainé à environ 75 à 140 degrés Celsius, de préférence environ 132 degrés Celsius ;
chauffer un mélange de fruits à coque à une plage d'environ 80 à 110 degrés Celsius ; et
mélanger le liant et mélange de fruits à coque dans un mélangeur continu gainé jusqu'à ce que le mélange de fruits à coque soit complètement revêtu.

11. Procédé selon la revendication 10, dans lequel le mélange du liant et du mélange de fruits à coque est dans la plage d'environ 10 à 60 secondes.

12. Procédé selon la revendication 10 ou la revendication 11, comprenant en outre l'étape consistant à ajouter des ingrédients mineurs choisis parmi la liste constituée d'arômes, grains, fruits à coques, céréales, muesli, fruits secs, graines, miettes de biscuit sucré et bretzels au mélangeur continu gainé.

13. Procédé selon l'une quelconque des revendications 10 à 12, comprenant en outre les étapes consistant à :
tasser le produit en une tranche après mélange du liant et du mélange de fruits à coque et découper la tranche à une dimension de produit final,
le procédé comprenant facultativement en outre les étapes consistant à :
rincer à l'azote un emballage ;
insérer le produit ; et
sceller le produit.
